# EUROPÄISCHE PATENTSCHRIFT

(11) **EP 0 361 011 B1**
(45) Veröffentlichungstag und Bekanntmachung des Hinweises auf die Patenterteilung: **13.04.1994**
(21) Anmeldenummer: 89113533.7
(22) Anmeldetag: 22.07.1989
(51) Int. Cl.: F16H 63/42

(54) **Anzeigevorrichtung für ein automatisches Kraftfahzeuggetriebe**
Indication device for an automatic vehicle transmission
Dispositif indicateur pour une transmission automatique de véhicule

(30) Priorität: 29.09.1988 DE 3832971
(43) Veröffentlichungstag der Anmeldung: 04.04.1990
(73) Patentinhaber: Dr.Ing.h.c. F. Porsche Aktiengesellschaft, 70435 Stuttgart (DE)
(72) Erfinder: Seidel, Willi, Dipl.-Ing., D-7147 Eberdingen-Hochdorf (DE); Ehniss, Roland, Dipl.-Ing. (FH), D-7500 Karlsruhe 41 (DE); Skabrond, Klaus, Dipl.-Ing. (FH), D-7251 Leonberg-Warmbronn (DE); Sauter, Ulrich, D-7533 Tiefenbronn (DE); Maier, Ulrich, D-7149 Freiberg/N (DE); Ebner, Roland, Dipl.-Ing., D-7147 Eberdingen (DE)

(56) Entgegenhaltungen:
- EP-A- 0 106 789
- DE-A- 2 507 086
- DE-A- 3 717 675
- DE-C- 891 661
- DE-C- 3 337 930
- US-A- 3 646 835
- PATENT ABSTRACTS OF JAPAN vol. 13, no. 214 (M-827) 18 Mai 1989,& JP-A-01 032931 (MAZDA) 02 Februar 1989,
- PATENT ABSTRACTS OF JAPAN vol. 9, no. 124 (M-383) 29 Mai 1985,& JP-A-60 008545 (MAZDA) 17 Januar 1985,
- Bosch "Technische Berichte" 7(1983)4, Seiten 160-166

## Beschreibung

Die Erfindung betrifft eine Anzeigevorrichtung nach der Gattung des Anspruchs 1.

Automatische Kraftfahrzeuggetriebe sind in der Regel mit einem Wählhebel ausgestattet, über den ein Fahrzeugführer einzelne oder mehrere automatisch zu schaltende Gangstufen vorwählen kann. Die vorgewählte Gangstufe wird hierbei über Anzeigeelemente visuell wahrnehmbar gemacht, welche hierzu mit alphanumerischen Zeichen oder Symbolen (P, R, N, D, 3, 2, 1) gekennzeichnet sind. Die Anzeigeelemente sind häufig skalenartig entweder parallel zu einer Schaftgasse in der der Wählhebel geführt ist oder innerhalb einer Schalttafel (dort insbesondere innerhalb eines Kombinationsinstruments mit mehreren Anzeigeinstrumenten) angeordnet.

Ein automatisches Kraftfahrzeuggetriebe mit einer derartigen Anzeigevorrichtung ist in Bosch 'Technische Berichte', 7(1983)4, auf den Seiten 160 bis 166 beschrieben. Dieses Getriebe weist jedoch neben einer vollautomatischen Betriebsweise zur Gangstufenwahl auch noch eine halbautomatische Betriebsweise auf, in der die einzelnen Gangstufen der Vorwärtsgänge (Gangstufen 1, 2, 3 und 4) manuell vorgewählt werden können. Die Umschaltung zwischen beiden Betriebsweisen wird mittels eines separaten Programmwählschalters vorgenommen.

Aus der DE-C-33 37 930 ist eine Schaltsteuerung für Automatikgetriebe bekannt, bei der mit Hilfe eines Wählschalters ein für den Automatik-Betrieb zugelassener Gangbereich definiert werden kann und die eine Anzeige für den eingelegten Gang aufweist.

Da jedoch selbst bei manueller Betriebsweise eine vorgewählte Gangstufe nur dann eingelegt wird, wenn die Antriebsmaschine des Kraftfahrzeugs nach dem Gangstufenwechsel innerhalb plausibler Drehzahlgrenzen läuft, können vorgewählte und eingelegte Gangstufen voneinander abweichen.

Es war daher Aufgabe der Erfindung, eine Anzeigevorrichtung für ein automatisches Kraftfahrzeuggetriebe zu schaffen, das einen augenblicklichen Zustand des Getriebes einem Fahrzeugführer ohne merkliche Ablenkung vom Verkehrsgeschehen anzeigt.

Die Erfindung ist durch die kennzeichnenden Merkmale des Anspruchs 1 gelöst. Weitere, die Erfindung in vorteilhafter Weise ausgestaltende Merkmale sind in den Unteransprüchen enthalten.

Die Vorteile der Erfindung sind in erster Linie darin zu sehen, daß eine Anzeigevorrichtung geschaffen ist, welche den Zustand des Getriebes, insbesondere die vorgewählte und eingelegte Fahrstufe bzw. Gangstufe einem Fahrzeugführer ohne merkliche Ablenkung vom Verkehrsgeschehen anzeigt. Sie ermöglicht darüber hinaus eine einfache und wirksame Unterscheidung, in welcher Betriebsweise (vollautomatisch/halbautomatisch) sich das Getriebe befindet und ist darüber hinaus einfach im Aufbau. Durch den geringen benötigten Schaltungsaufwand ist die Vorrichtung ferner zur Nachrüstung bestehender Anzeigevorrichtungen geeignet.

Die Erfindung wird anhand von in den Zeichnungen dargestellten Beispielen nachstehend näher erläutert.
Es zeigt
- Fig. 1: ein Blockschaltbild einer elektrohydraulischen, automatischen Kraftfahrzeuggetriebesteuerung nach dem Stand der Technik,
- Fig. 2: ein Blockschaltbild nach Fig. 1, jedoch für einen in zwei paralleln Gassen geführten Schalthebel und einer Anzeigevorrichtung nach der Erfindung,
- Fig. 3: ein Schaltbild einer Anzeigevorrichtung nach Fig. 2,
- Fig. 4: ein Rundinstrument mit einer Anzeigevorrichtung nach Fig. 2.

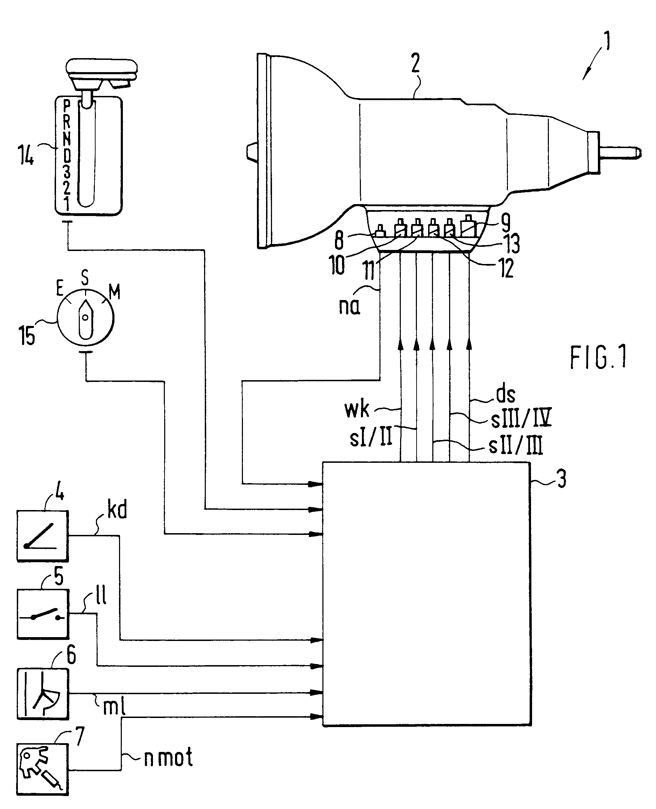

In Fig. 1 ist mit 1 eine elektrohydraulische Steuerung eines automatischen Kraftfahrzeuggetriebes 2 gezeigt, wie es beispielsweise in Bosch 'Technische Berichte', 7(1983)4 auf den Seiten 160 bis 166 und in der ATZ 85(1983)6 auf den Seiten 401 bis 405 beschrieben ist.

Ein Steuergerät 3 steuert in Abhängigkeit von einem Kick-down-Signal kd eines Kick-down-Gebers 4 am Fahrpedal des Kraftfahrzeugs sowie einem Leerlaufsignal ll eines Drosselklappenschalters 5, eines Motorlastsignals ml eines Lastsignalgebers 6 (Luftmengen- oder Luftmassenmeßgerät, Drosselklappenwinkelgeber) und eines Motordrehzahlsignals nmot eines Motordrehzahlgebers 7 einer nicht gezeigten Brennkraftmaschine und eines Getriebeausgangsdrehzahlsignals na eines Getriebeausgangssignalgebers 8
- einen Druckregler 9 für ein Hydraulikfluid (Signalausgang ds),
- ein erstes Elektromagnetventil 10 zur Steuerung eines Wandlers bzw. einer Wandlerüberbrückungskupplung (Signalausgang wk),
- ein zweites Elektromagnetventil 11 zur Steuerung des Gangstufenwechsels zwischen den Gangstufen I und II (Signalausgang sI/II),
- ein drittes Elektromagnetventil 12 zur Steuerung des Gangstufenwechsels zwischen den Gangstufen II und III (Signalausgang sII/III) und
- ein viertes Elektromagnetventil 13 zur Steuerung des Gangstufenwechsels zwischen den Gangstufen III und IV (Signalausgang sIII/IV).

Die Steuerung ist hierbei vom Fahrzeugführer über einen Wählhebel 14 zur Vorwahl der Gangstufen P, R, N, D, 3, 2, 1 und einen Programmwählschalter 15 zum Anwählen von Fahrprogrammen E, S, M beeinflußbar.

In den Schaltprogrammen E bzw. S, in denen die Schaltvorgänge in einer vollautomatischen Betriebsweise nach verbrauchsoptimierten bzw. leistungsoptimierten Kriterien gesteuert werden, sind die Fahrstufen P (Parken), R (Rückwärtsgangstufe), N (Leergangstufe), D (alle vier Gangstufen IV, III, II, I), 3 (Begrenzung auf die drei untersten Gangstufen III, II, I) und 2 (Begrenzung auf die Gangstufen II und I) und 1 (Begrenzung auf die erste Gangstufe I) anwählbar.

Im Schaltprogramm M ist dagegen eine halbautomatische Betriebsweise mit direkter Gangstufenvorwahl (D=IV, 3=III, 2=II, 1=I) innerhalb sinnvoller (plausibler) Drehzahlen möglich, wobei beim Erreichen von Drehzahlgrenzen, die zu einer Beschädigung (Überdrehen) oder Abwürgen des Motors führen könnten, automatisch hoch- bzw. zurückgeschaltet wird. Ebenso werden Gangstufenwechsel unterdrückt, sofern die Motordrehzahl in der vorgewählten Gangstufe die plausiblen Drehzahlgrenzen verlassen würde.

Aus den oben genannten Gründen können daher vorgewählte und eingelegte Gangstufe voneinander abweichen. Da jedoch bei herkömmlichen automatischen Getrieben lediglich eine Fahrstufen-Anzeige entsprechend der Wählhebelstellung erfolgt, geht somit die Information über den tatsächlichen Zustand des Getriebes (eingelegte Gangstufe, angewähltes Fahrprogramm) verloren.

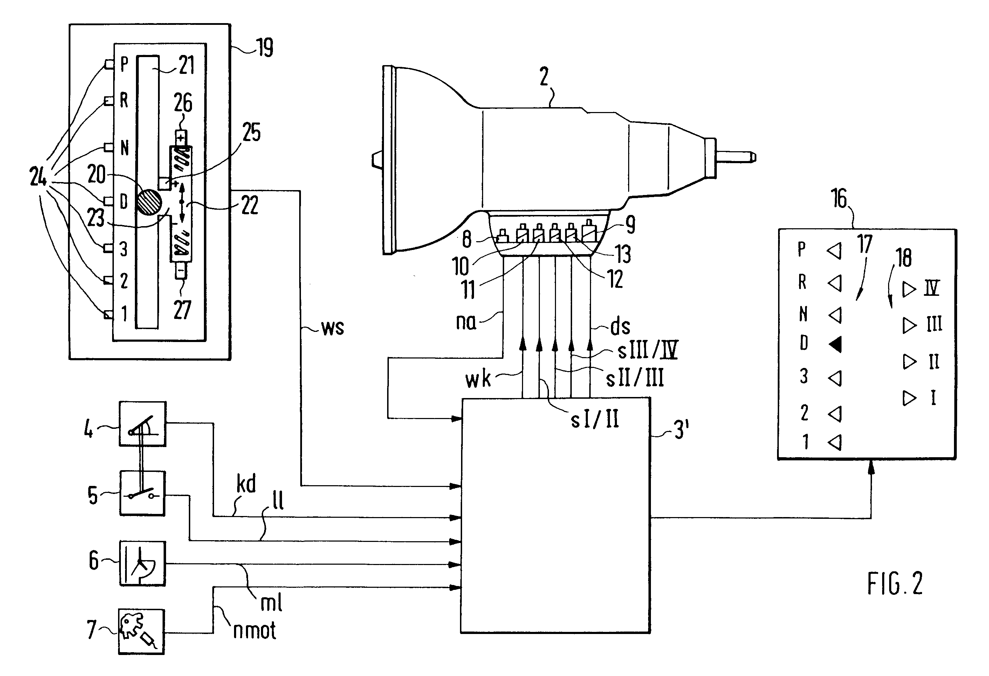

In Fig. 2 ist daher die Getriebesteuerung 1 nach Fig. 1 um eine Anzeigevorrichtung 16 erweitert, welche erste Anzeigeelemente 17 und zweite Anzeigeelemente 18 umfaßt. Die ersten Anzeigeelemente zeigen in der vollautomatischen Betriebsweise die Stellung des Wählhebels, d.h. , die vorgewählte Fahrstufe (P, R, N, D, 3, 2, 1) an, indem das entsprechende, durch die jeweiligen alphanumerischen Zeichen gekennzeichnete Anzeigeelement in Form eines Dreiecksymbols angesteuert wird.

Die zweiten Anzeigeelemente 18 zeigen auf entsprechende Weise insbesondere (oder auch nur) in der halbautomatischen Betriebsweise eine eingelegte Gangstufe IV, III, II oder I an. Die ersten Anzeigeelemente 17 sind in der halbautomatischen Betriebsweise mit manueller Vorwahl der Gangstufen selbstverständlich nicht angesteuert.

Durch Anordnung der ersten und zweiten Anzeigeelemente in zwei parallelen Reihen (oder entsprechend eines Schaltschemas des Wählhebels) ergibt sich eine besonders einprägsame und leicht erfaßbare Anzeige des Getriebezustands. Als Beispiel ist hier eine besonders vorteilhafte Anordnung mit einer Wählhebeleinheit 19 gezeigt, welche in der DE-OS 38 07 881 näher beschrieben ist.

Ein Wählhebel 20 ist in einer ersten Schaltgasse 21 und einer dazu parallelen zweiten Schaltgasse 22 geführt. Erste Schaltgasse 21 und zweite Schaltgasse 22 sind über eine in Höhe der Fahrstufe D der ersten Schaltgasse angeordnete Quergasse 23 miteinander verbunden. Die (konventionell aufgebaute) erste Schaltgasse 21 dient der Vorwahl der Fahrstufen P, R, N, D, 3, 2, 1 in der vollautomatischen Betriebsweise.

Aus der Fahrstufe D heraus kann die vollautomatische Betriebsweise verlassen und die halbautomatische Betriebsweise angewählt werden, indem der Schalthebel 20 über die Quergasse 23 in die zweite Schaltgasse 22 bewegt wird. Dort kann durch einmaliges Verschwenken des durch Federkraft in Mittellage gehaltenen Schalthebels 20 in (+)- oder (-)-Richtung eine Hochschaltung bzw. Rückschaltung um jeweils eine Gangstufe vorgewählt werden, welche dann, wenn sie in plausible Drehzahlbereiche fällt, vom (modifizierten) Steuergerät 3' gesteuert, ausgeführt wird. Der eingewechselte Gang wird dann über die zweiten Anzeigeelemente 18 angezeigt. Ebenso kann durch Verschwenken des Schalthebels 20 über die Quergasse 23 die halbautomatische Betriebsweise zugunsten der vollautomatischen wieder verlassen werden.

Zur Abtastung der Schalthebelstellung sind Positionsdetektoren 24 für die Stellungen P, R, N, D, 3, 2, 1 der ersten Schaltgasse 21 sowie ein Positionsdetektor 25 zur Erfassung der Schalthebelstellung in der zweiten Schaltgasse 22 und je ein Positionsdetektor 26 und 27 zur Abtastung der Hochschalt- und der Rückschaltvorwahlstellung des Schalthebels 20 vorgesehen.

Anstatt der Positionsdetektoren 24 (vollautomatische Betriebsweise) kann auch ein Kodierschalter am Schalthebel angeordnet sein, welcher die sieben Winkelpositionen des Wählhebels 20 in einen bestimmten dreistelligen Binärcode übersetzt. Ebenso ist denkbar, die Signale der zehn Positionsdetektoren 24 bis 27 über einen Kodierbaustein in einen vierstelligen Binärcode zu übertragen, um die Anzahl von Leitungen (Ausgangssignal ws) zwischen Schalthebeleinheit 19 und dem modifizierten Steuergerät 3' weiter zu reduzieren. Dort wird dann in einer Dekodiereinheit oder in einem Softwareteilprogramm die entsprechende Binärinformation wieder in die Schalthebelstellung umgesetzt (dekodiert).

Die Ansteuerung der Anzeigevorrichtung 16 kann nun entweder über die Steuereinheit 3' vorgenommen werden, indem diese die Wählhebelstellung erfaßt und die ersten Anzeigeelemente 17 und die zweiten Anzeigeelemente 18 entsprechend der Wählhebelstellung und der eingelegten Gangstufe ansteuert.

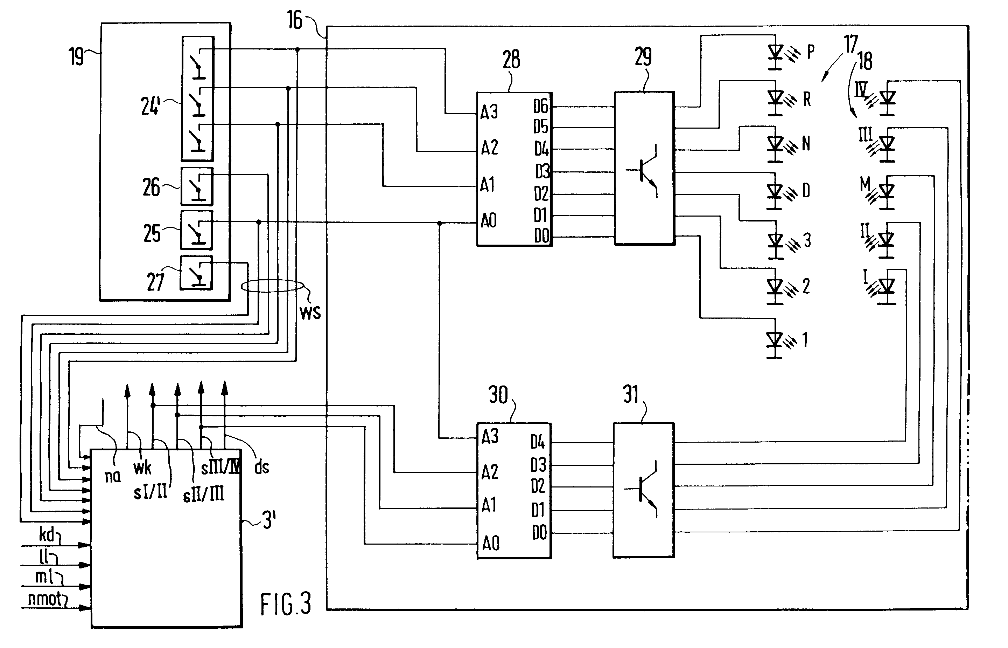

Selbstverständlich ist es möglich, die Anzeigevorrichtung auch direkt an die Wählhebeleinheit anzuschließen und die Ansteuerung der zweiten Anzeigeelemente von den Signalausgängen sI/II, sII/III, sIII/IV abzuleiten, wie dies in Fig. 3 gezeigt ist. Es ist hierbei der Fall angenommen, daß die Wählhebelstellung in der ersten Schaltgasse als Binärinformation von einem Kodierschalter 24' vorliegt.

Die drei Leitungen vom Dekodierschalter 24' der Wählhebeleinheit 19 werden zusammen mit dem Signal vom Positionsdetektor 25 (Schalthebel 20 in der zweiten Schaltgasse 22) einem ersten Dekodierbaustein 28 zugeführt, welcher in Abhängigkeit von der an seinen Eingängen A0 - A3 anliegenden Signalkombination an einem seiner Ausgänge D0 - D6 ein Signal zur Ansteuerung eines der ersten Anzeigeelemente 17 über einen Treiberbaustein 29 (der eventuell entfallen kann) ansteuert. Als Anzeigeelemente sind hier, ohne Einschränkung der Allgemeinheit, Leuchtdioden eingezeichnet.

Ein zweiter Dekoderbaustein 30 wird an seinen Eingängen A0 - A3 mit den Signalen der Signalausgänge sI/II, sII/III, sIII/IV des modifizierten Steuergeräts 3' zur Ansteuerung der Schaltventile 11, 12, 13 und mit dem Signal des Positionsdetektors 25 beaufschlagt und steuert in Abhängigkeit von der Eingangskombination einen der Ausgänge D0 - D4 an; ein Treiberbaustein 31 verstärkt das Ausgangssignal und steuert eines der Anzeigeelemente 18 an, wobei hier zusätzlich ein mit M gekennzeichnetes Anzeigeelement eingesetzt sein kann, welches in der halbautomatisches Betriebsweise dauernd aufleuchtet.

Die beiden Dekoderbausteine können hierbei auch als programmierbare Speicherbausteine ausgeführt sein, wobei ein als Adresse dienendes bestimmtes Eingangsdatum (bzw. eine bestimmte Signalkombination) an den Eingängen A0 - A3 (Adressbus) eine bestimmte Speicherzelle ansteuert; diese enthält ein Datum mit einer logischen Eins an derjenigen Stelle der Ausgänge D0 - D6 (Datenbus), welche das entsprechende Anzeigeelement ansteuert.

Der Positionsdetektor 25 dient je nachdem, in welcher Schaltgasse sich der Schalthebel 20 befindet, der Ansteuerung entweder der ersten oder der zweiten Anzeigeelemente 17, 18.

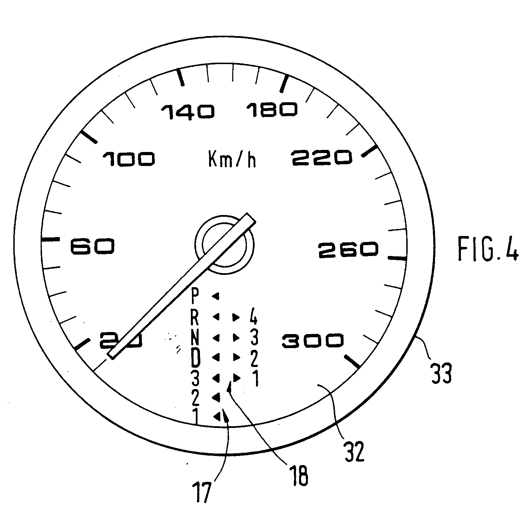

In Fig. 4 schließlich ist die Anordnung der Anzeigevorrichtung mit den ersten Anzeigeelementen 17 und den zweiten Anzeigeelementen 18 innerhalb einer Anzeigenfrontplatte 32 eines Fahrgeschwindigkeitsanzeige-Instruments 33 gezeigt. Die Anzeigevorrichtung kann selbstverständlich in jedem Anzeigeinstrument eines Kraftfahrzeugs angeordnet werden, wobei dieses allerdings möglichst zentral im Blickwinkel des Fahrzeugführers liegen sollte.

Es ist ferner möglich, innerhalb der zweiten Anzeigeelemente neben der eingelegten Gangstufe auch noch eine vorgewählte Gangstufe (blinkend) darzustellen, sofern vorgewählte und eingelegte Gangstufe voneinander abweichen.

Die angesteuerten Anzeigeelemente sollten unter allen denkbaren Beleuchtungsverhältnissen (Fremdlicht, Streulicht) wenigstens solange sichtbar sein, wie entweder der Zündschalter des Kraftfahrzeugs betätigt oder eine Beleuchtung (Scheinwerfer, Innenraumbeleuchtung) eingeschaltet ist.

## Patentansprüche

1. Anzeigevorrichtung (16) für ein automatisches elekronisch oder elektrohydraulisch gesteuertes mit einem Wählhebel (20) zur Vorwahl einzelner oder mehrerer automatisch zu schaltender Gangstufen (Fahrstufen (P, R, N, D, 3, 2, 1)) ausgestattetes Kraftfahrzeuggetriebe (2), welches eine vollautomatische Betriebsweise zur Gangstufenwahl oder eine halbautomatische Betriebsweise zuläßt, in der die automatisch zu schaltenden Gangstufen (IV, III, II, I) manuell vorgewählt werden können, wobei die Anzeigevorrichtung (16) die vorgewählten Gangstufen (Fahrstufen (P, R, N, D, 3, 2, 1)) entsprechend der Wählhebelstellung durch mit alphanumerischen Zeichen oder Symbolen gekennzeichnete erste Anzeigeelemente (17) visuell wahrnehmbar macht, **dadurch gekennzeichnet**, daß die Anzeigevorrichtung (16) örtlich von den ersten Anzeigeelementen (17) abgesetzte zweite Anzeigeelemente (18) umfaßt, welche eine eingelegte Gangstufe (I, II, III, IV) visuell kenntlich machen und lediglich bei halbautomatischer Betriebsart mit manueller Vorwahl der Gangstufen (I, II, III, IV) angesteuert werden.

2. Anzeigevorrichtung nach Anspruch 1, dadurch gekennzeichnet, daß wenigstens die ersten Anzeigeelemente (17) entsprechend einem Schaftschema des Wählhebels (20) angeordnet sind.

3. Anzeigevorrichtung nach Anspruch 1 oder 2, dadurch gekennzeichnet, daß die ersten und die zweiten Anzeigeelemente (17,18) jeweils linear übereinander in zwei parallelen Reihen angeordnet sind.

4. Anzeigevorrichtung nach Anspruch 1, 2 oder 3, dadurch gekennzeichnet, daß die ersten und zweiten Anzeigeelemente (17,18) in einer Anzeigenfrontplatte (32) eines zentral im Blickwinkel eines Fahrzeugführers liegenden Anzeigeinstruments, beispielsweise innerhalb eines Motordrehzahlmessers oder eines Fahrgeschwindigkeits- Anzeigeinstruments (33), angeordnet sind.

5. Anzeigevorrichtung nach Anspruch 4, dadurch gekennzeichnet, daß die Anordnung der Reihe der ersten Anzeigeelemente (17) und der Reihe der zweiten Anzeigeelemente (18) relativ zueinander einer Anordnung zweier über eine Quergasse (23) miteinander verbundener erster und zweiter parallel zueinander verlaufender Schaltgassen (21,22) entspricht, wobei die erste Schaltgasse (21) zur Vorwahl der automatisch zu schaltenden Gangstufen (Fahrstufen (P, R, N, D, 3, 2, 1)) in der vollautomatischen Betriebsweise und die zweite Schaltgasse (22) zur Vorwahl der Gangstufen (I, II, III, IV) in der manuellen Betriebsweise dient, und wobei der Wählhebel (20) in der zweiten Schaltgasse (22) vorzugsweise nach Art einer Wippschaltung geführt ist, derart, daß mit einem Verschwenken des Wählhebels (20) aus einer neutralen, im Bereich der Quergasse liegenden, als stabile Ruhelage ausgebildeten Mittellage heraus in die eine Richtung (+) die Vorwahl der Gangstufe (I, II, III, IV) jeweils um eine Gangstufe erhöht und mit dem Verschwenken des Wählhebels (20) in die andere Richtung (-) jeweils um eine Gangstufe vermindert werden kann.

6. Anzeigevorrichtung nach wenigstens einem der vorangehenden Ansprüche, dadurch gekennzeichnet, daß in der Reihe der zweiten Anzeigeelemente (18) zusätzlich zur angezeigten eingelegten Gangstufe (I, II, III, IV) die vorgewählte Gangstufe (1, 2, 3, 4) angezeigt wird.

7. Anzeigevorrichtung nach Anspruch 6, dadurch gekennzeichnet, daß die vorgewählte Gangstufe (1,2, 3, 4) blinkend angezeigt wird.

8. Anzeigevorrichtung nach wenigstens einem der vorangehenden Ansprüche, dadurch gekennzeichnet, daß die angesteuerten Anzeigeelemente (17,18) unter allen denkbaren Beleuchtungsverhältnissen wenigstens solange sichtbar sind, wie ein Zündschalter des Kraftfahrzeugs betätigt oder eine Beleuchtung des Kraftfahrzeugs eingeschaltet ist.

9. Anzeigevorrichtung nach wenigstens einem der vorangehenden Ansprüche, dadurch gekennzeichnet, daß die ersten Anzeigeelemente (17) direkt oder über Leistungsverstärker (29) von die Stellung des Wählhebels (20) erfassenden Positionsschaltern (24) angesteuert werden.

10. Anzeigevorrichtung nach wenigstens einem der vorangehenden Ansprüche, dadurch gekennzeichnet, daß die Stellung des Wählhebels (20) von einem Kodierschalter (24') erfasst wird, dessen Ausgangssignale über einen ersten Dekoderbaustein (28) die ersten Anzeigeelemente (17) direkt oder über Leistungsverstärker (29) ansteuern.

11. Anzeigevorrichtung nach wenigstens einem der vorangehenden Ansprüche, dadurch gekennzeichnet, daß die Ansteuerung der zweiten Anzeigeelemente (18) direkt über Ansteuersignale (sI/II, sII/III, sIII/IV) der Schaltventile (11-13) des Kraftfahrzeuggetriebes (2) erfolgt oder von diesen Ansteursignalen (sI/II, sII/III, sIII/IV) über einen zweiten Dekoderbaustein (30) abgeleitet wird.

## Claims

1. Display apparatus (16) for an automatic, electronically or electro-hydraulically controlled motor vehicle transmission (2) which is provided with a selector lever (20) for the pre-selection of an individual or of a plurality of gear stages (driving stages (P, R, N, D, 3, 2, 1)) to be switched automatically and which permits a fully automatic operation for the selection of gear stages or a semi-automatic operation in which the gear stages (IV, III, II, I) to be switched automatically can be pre-selected manually, the display apparatus (16) making the pre-selected gear stages (driving stages (P, R, N, D, 3, 2, 1)) visually perceptible in accordance with the position of the selector lever by first display elements (17) which are characterized by alphanumeric signs or symbols, characterized in that the display apparatus (16) comprises second display elements (18) which are offset in their location from the first display elements (17) and which make an engaged gear stage (I, II, III, IV) visually recognizable and which are only triggered in semi-automatic mode by manual pre-selection of the gear stages (I, II, III, IV).

2. Display apparatus according to Claim 1, characterized in that at least the first display elements (17) are arranged in accordance with a switching pattern of the selector lever (20).

3. Display apparatus according to Claim 1 or 2, characterized in that the first and the second display elements (17, 18) are in each case arranged linearly one above the other in two parallel rows.

4. Display apparatus according to Claim 1, 2 or 3, characterized in that the first and second display elements (17, 18) are arranged in a display front panel (32) of a display instrument located centrally in the angle of view of a vehicle driver, for example within an engine rev counter or a driving speed display instrument (33).

5. Display apparatus according to Claim 4, characterized in that the arrangement of the row of first display elements (17) and the row of second display elements (18) relative to one another corresponds to an arrangement of two, first and second, switching guide slots (21, 22) which run parallel to one another and are connected to one another by way of a transverse guide slot (23), the first switching guide slot (21) serving for the pre-selection of the gear stages (driving stages (P, R, N, D, 3, 2, 1)) to be switched automatically in the fully automatic operation and the second switching guide slot (22) serving for the pre-selection of the gear stages (I, II, III, IV) in the manual operation, and the selector lever (20) being guided in the second switching guide slot (22) preferably in the manner of a rocker switch such that on pivoting the selector lever (20) out of a neutral central position located in the region of the transverse guide slot and formed as a stable rest position in the one direction (+) the pre-selection of the gear stage (I, II, III, IV) is in each case increased by one gear stage and on pivoting the selector lever (20) in the other direction (-) it can be decreased in each case by one gear stage.

6. Display apparatus according to at least one of the preceding claims, characterized in that the pre-selected gear stage (1, 2, 3, 4) is displayed in the row of second display elements (18) in addition to the engaged gear stage (I, II, III, IV) displayed.

7. Display apparatus according to Claim 6, characterized in that the pre-selected gear stage (1, 2, 3, 4) is a flashing display.

8. Display apparatus according to at least one of the preceding claims, characterized in that the triggered display elements (17, 18) are visible in all conceivable lighting conditions at least as long as an ignition switch of the motor vehicle is actuated or lighting of the motor vehicle is switched on.

9. Display apparatus according to at least one of the preceding claims, characterized in that the first display elements (17) are triggered directly or by way of power amplifiers (29) by position switches (24) which detect the position of the selector lever (20).

10. Display apparatus according to at least one of the preceding claims, characterized in that the position of the selector lever (20) is detected by an encoding switch (24') whereof the output signals trigger, by way of a first decoding block (28), the first display elements (17) directly or by way of power amplifiers (29).

11. Display apparatus according to at least one of the preceding claims, characterized in that the triggering of the second display elements (18) is effected directly by way of triggering signals (sI/II, sII/III, sIII/IV) of the switching valves (11-13) of the motor vehicle transmission (2) or is diverted by these triggering signals (sI/II, sII/III, sIII/IV) by way of a second decoding block (30).

## Revendications

1. Dispositif indicateur (16) pour une boîte de vitesses (2) automatique d'un véhicule automobile, commandée électroniquement ou électrohydrauliquement, équipée d'un levier de sélection (20) pour la présélection de vitesses de marche individuelles ou de plusieurs vitesses de marche à commander automatiquement (crans de marche (P, R, N, D, 3, 2, 1)), qui permet un fonctionnement entièrement automatique pour la sélection des vitesses ou un fonctionnement semi-automatique dans lequel les vitesses (IV, III, II, I) à commander automatiquement peuvent être sélectionnées manuellement, le dispositif indicateur (16) rendant visibles les vitesses sélectionnées (crans de marche (P, R, N, D, 3, 2, 1)) en fonction de la position du levier de sélection par des premiers éléments d'indication (17) caractérisés avec des caractères alphanumériques ou des symboles, caractérisé en ce que le dispositif indicateur (16) comprend des seconds éléments d'indication (18), décalés localement des premiers éléments d'indication (17), qui visualisent une vitesse enclenchée (I, II, III, IV) et qui ne sont commandés qu'en fonctionnement semi-automatique avec sélection manuelle des vitesses (I, II, III, IV).

2. Dispositif indicateur selon la revendication 1, caractérisé en ce que les premiers éléments d'indication (17) au moins sont disposés suivant un schéma de commande du levier de sélection (20).

3. Dispositif indicateur selon les revendications 1 ou 2, caractérisé en ce que les premiers et les seconds éléments d'indication (17, 18) sont superposés linéairement en deux rangées parallèles.

4. Dispositif indicateur selon les revendications 1, 2 ou 3, caractérisé en ce que les premiers et les seconds éléments d'indication (17, 18) sont placés dans une plaque frontale d'indication (32) d'un instrument indicateur, situé au centre du champ de vision d'un conducteur par exemple à l'intérieur d'un compte-tours ou d'un indicateur de vitesse (33).

5. Dispositif indicateur selon la revendication 4, caractérisé en ce que la disposition de la rangée des premiers éléments d'indication (17) et de la rangée des seconds éléments d'indication (18) l'une par rapport à l'autre correspond à une disposition de deux premières et secondes voies de commutation (21, 22) reliées entre elles par une voie transversale (23) et parallèles entre elles, la première voie de commutation (21) servant à la sélection des vitesses à commander automatiquement (crans de marche (P, R, N, D, 3, 2, 1)) en fonctionnement entièrement automatique et la deuxième voie de commutation (22) servant à la sélection des vitesses (I, II, III, IV) en fonctionnement manuel, et le levier de sélection (20) étant guidé dans la deuxième voie de commutation (22) de préférence à la manière d'une commande à bascule de telle façon que par un pivotement du levier de sélection (20) à partir d'une position centrale neutre, située dans la zone de la voie transversale, configurée en position de repos stable, dans un sens (+) la sélection de la vitesse (I, II, III, IV) peut être augmentée chaque fois d'un cran et avec le pivotement du levier de sélection (20) dans l'autre sens (-) peut être diminuée chaque fois d'un cran.

6. Dispositif indicateur selon l'une au moins des revendications précédentes, caractérisé en ce que dans la rangée des seconds éléments d'indication (18) il est indiqué en plus de la vitesse (I, II, III, IV) enclenchée indiquée, la vitesse présélectionnée (1, 2, 3, 4).

7. Dispositif indicateur selon la revendication 6, caractérisé en ce que la vitesse (I, II, III, IV) présélectionnée est indiquée par un clignotement.

8. Dispositif indicateur selon l'une au moins des revendications précédentes, caractérisé en ce que les éléments d'indication (17, 18) commandés sont visibles dans toutes les conditions d'éclairage imaginables, au moins jusqu'à ce qu'un contacteur d'allumage du véhicule soit actionné ou un éclairage du véhicule soit enclenché.

9. Dispositif indicateur selon l'une au moins des revendications précédentes, caractérisé en ce que les premiers éléments d'indication (17) sont commandés directement ou par des amplificateurs de puissance (29), par des interrupteurs de position (24) détectant la position du levier de sélection (20).

10. Dispositif indicateur selon l'une au moins des revendications précédentes, caractérisé en ce que la position du levier de sélection (20) est détectée par un interrupteur de codage (24') dont les signaux de sortie commandent par un premier module de décodage (28), les éléments d'indication (17), soit directement, soit par l'intermédiaire d'amplificateurs de puissance (29).

11. Dispositif indicateur selon l'une au moins des revendications précédentes, caractérisé en ce que la commande des seconds éléments d'indication (18) s'effectue directement par des signaux de commande (sI/II, sII/III, sIII/IV) des soupapes de commutation (11 à 13) de la boîte de vitesses (2) du véhicule ou est dérivée de ces signaux de commande (sI/II, sII/III, sIII/IV), par un deuxième module de décodage (30).
